# EUROPEAN PATENT SPECIFICATION

(11) **EP 1 452 092 B1**
(45) Date of publication and mention of the grant of the patent: **31.05.2006**
(21) Application number: 04075581.1
(22) Date of filing: 24.02.2004
(51) Int. Cl.: A01K 31/12

(54) **Pivoting perch**
Schwenkbare Sitzstange
Perchoir pivotant

(30) Priority: 25.02.2003 GB 0304226
(43) Date of publication of application: 01.09.2004
(73) Proprietor: C J Wildbird Foods Limited, Shrewsbury SY4 4UR (GB)
(72) Inventor: Nock, Robert Kenneth, Cradley Heath Warley W Midlands B64 7EB (GB)
(74) Representative: Barnfather, Karl Jon

(56) References cited:
- EP-A- 0 104 766
- US-A- 4 328 765
- US-A- 5 105 765

## Description

Bird feeders having perches attached thereto are well known. Frequently, the perch comprises an elongate rod or the like fixed to a base member of the feeder or to individual feeding ports. Such feeding ports typically comprise a locating member with a central aperture; the member being configured to locate within a wall portion of the feeder. In use a bird resting on the perch normally has to turn its head 90° so that it faces a port aperture where food is dispensed. While there are some bird feeders that avoid this problem, they generally involve a complex perch mechanism. EP-A- 0104766 discloses a bird food dispenser having fixed pivoting perches that also serve as a closure members. Further, bird feeders tend to be packaged for sale in a fully assembled state; consequently, feeders with protruding perch rods require a packing box considerably larger in cross section than the cross section of the feeder body. This is wasteful, and ultimately results in an environmental penalty; in that the packaging has to be disposed of.

An object of the present invention is to provide an improved bird feeder perch and in particular a perch that pivots. A further object is to provide a perch that provides improved access to dispensed food for birds resting on the perch.

In a first aspect the bird feeder perch assembly comprises a locating member, a perch and pivoting means that allows the perch to pivot relative to the locating means such that in use the locating member may engage a bird feeder body, and when so engaged the perch may pivot from a retracted position in which the perch is proximal the feeder body to an extended position in which the perch projects outwardly from the body, such that a bird may rest upon the perch

Preferably, in moving the perch from a fully retracted position to a fully extended position the perch pivots through angle of at least 80°. The perch may pivot through an angle of 120° to 160° in order to more easily accommodate larger birds.

The pivoting means may comprise a U-shaped recess in the locating member and an engaging shaft attached to or integral with the perch.

Preferably the perch comprises a portion that in use is substantially horizontal and parallel to the plane of an exterior face of the feeder body surface at the region of engagement of the locating member, and displaced some distance from that region of the feeder body. This has the advantage that it allows a bird to rest on the perch and feed without bending its neck.

The perch may comprise at least two elongate members that extend in mutually orthogonal directions. Optionally the perch may be ring-shaped with a pivot at the periphery of the ring. Preferably, the perch is U-shaped and the pivoting means comprises a pivot at each free end of the perch.

Preferably the perch comprises a stop bar that in use abuts a stop member on the locating member. Alternatively, the perch may comprise a stop member that abuts a stop bar on the locating member.

The locating member may comprise a bird feeding port. This provides an improved perch that may advantageously be retracted so that it lies against or close to the outer wall of a birdfeeder. Preferably, in use the pivoting means is located below the port aperture and/or a stop bar on the perch abuts against a stop member located below the port aperture.

A preferred embodiment of the invention will now be described by reference to the following diagramatic figures in which:
Figure 1 is a perspective view of a perch assembly according to the invention in an extended position;
Figure 2 is a perspective view of a perch assembly of Figure 1 in a retracted position:
Figure 3a to 3d show various views of a locating member of the perch assembly;
Figure 4 shows a sectioned side view of the locating member of the perch assembly of Figure 3;
Figures 5a to 5e show various views of a second part of the perch assembly;
Figure 6 shows a sectioned side view of the second part of the perch assembly of Figure 5;
Figures 7 and 8 show the perch assembly of Figure 1 attached to a bird feeder;
Figures 9 and 10 show a further embodiment according to the invention attached to a cage, and to a bird feeder with offset feeding holes respectively:
Figures 11a to 11e show various views of the locating member of the perch assembly shown in Figures 9 and 10; and
Figure 12 shows a sectioned side view of the second part of the perch assembly shown in Figures 11.

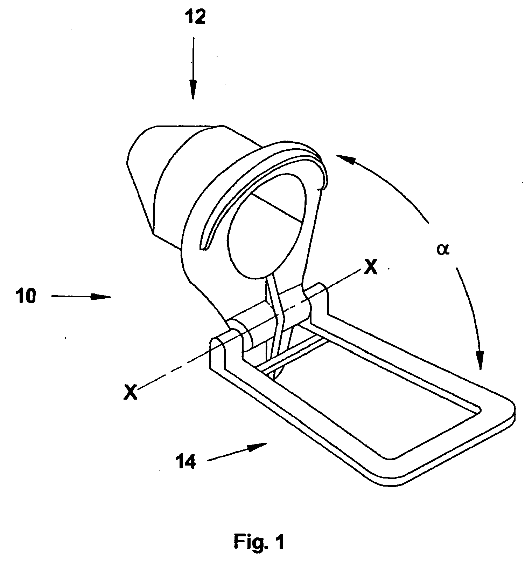

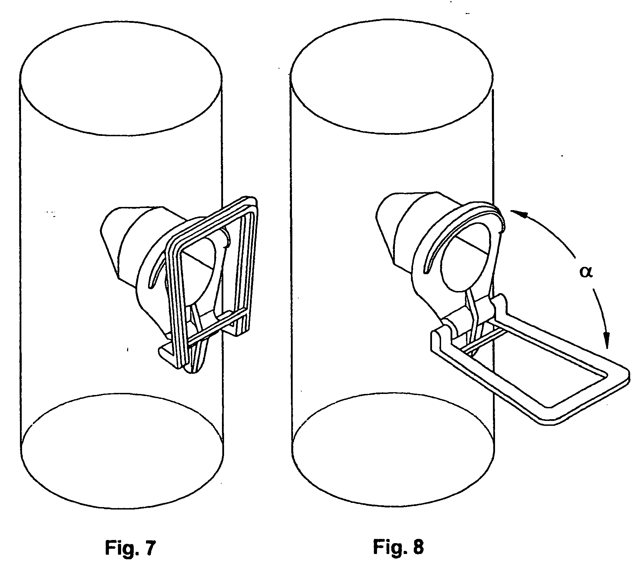

With reference to Figures 1 to 8. Figure 1 shows a perspective view of a perch assembly 10 according to the invention; the assembly being in a fully opened position. The assembly comprises a first part (locating member) 12 and a second part 14.

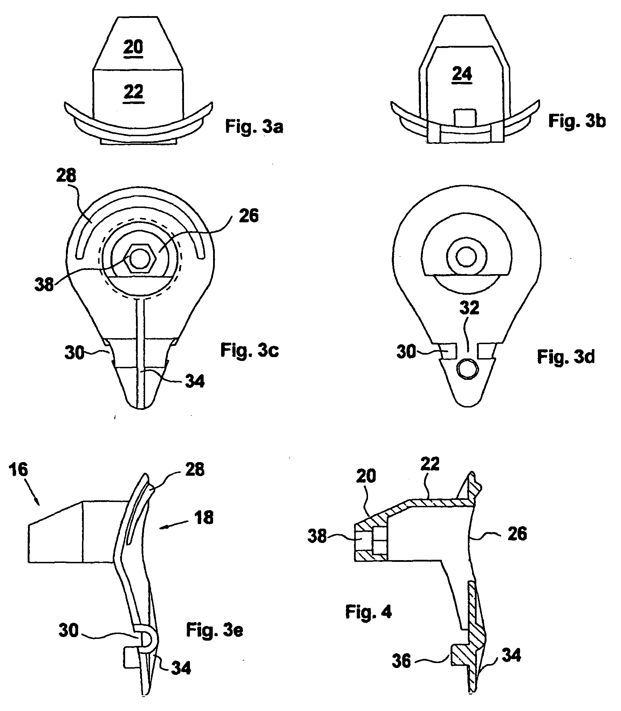

The first part 12 may be a bird feeder port with certain modifications as shown in Figures 3 and 4 (see latter). In this case, the port 12 may be located in a suitable sized aperture of a bird feeder body. The port 12 comprises a feed distributor 16 and a flange 18. Feed distributor 16 comprises a truncated cylindrical portion 22 and a truncated frustroconical portions 20. Portions 20 and 22 are truncated below their lower half so that, in use, seed may enter the port 12 via the orifice 24 formed by these truncations.

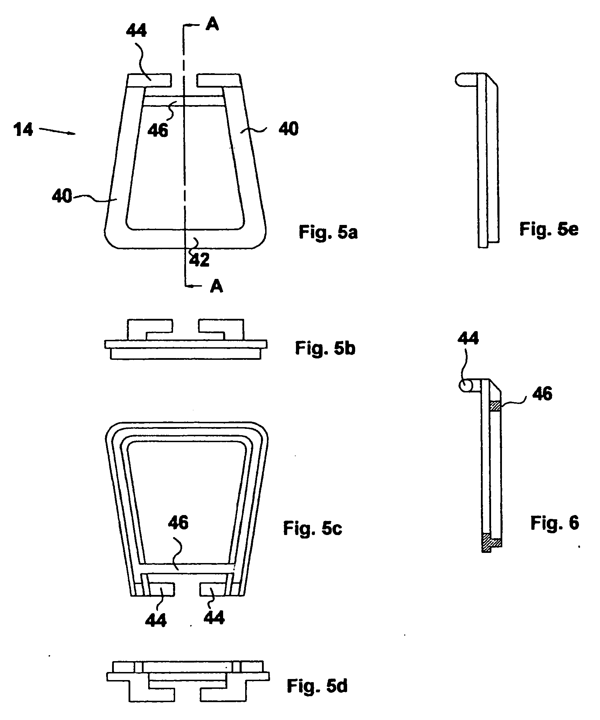

Flange 18 presents a circular orifice 26 via which, in use, a bird may access seed with its beak from the birdfeeder. The upper portion of flange 18 has a hood 28 that is positioned so that in use it shields the aperture against rainfall and thus helps keep birdfeed dry. The lower portion of flange 18 has a U-shaped recess 30 in each side. These recesses provide pivot means for the second part 14 of the perch assembly 10 (see latter). Between the recesses 30 there is an integral central portion 32 that has a raised front face 34 that acts as a stop member such that when the perch assembly is in a fully extended position (see Figure 1) the second part 14 abuts against this stop member (see below). The first part 12 also has a protruding notch 36 that, in use, locates a hole in the main body of the bird feeder.
The second part 14 is a perch (see Figures 5 and 6), comprising side rails 40 formed integrally with an end rail 42; the two side rails in combination forming a perch that is predominantly U-shaped. The free ends of the side rails each have a pivot rod 44 having a common axis; this axis being generally parallel to the longitudinal axis of the end rail 42. Rods 44 are configured so as to engage the U-shaped recesses 30 in port 12.

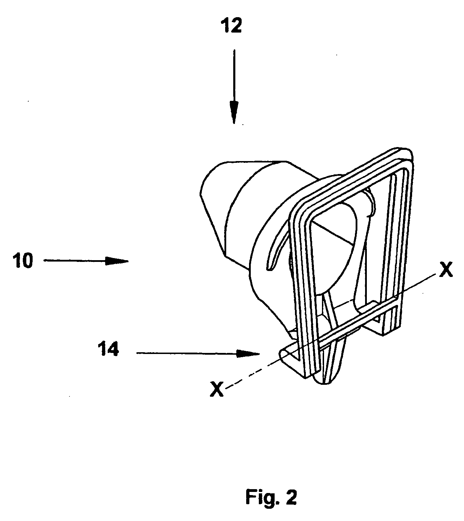

In use port flange 18 is fixed against the outer wall (W) of a birdfeeder body. Thus, pivot rods 44 are retained within the U-shaped recesses 30 by this wall. In use, the perch 14 may pivot about axis X-X' (see Figure 1) allowing it to be moved from a fully extended position (Figure 1) to a fully retracted position (Figure 2). Perch 14 has an integral cross bar member 46 in the form of an elongate rod fixed to each side rail 40 near the free end of the rails. This bar 46 abuts against stop member 34 when the perch assembly is in a fully extended position (see Figure 1). By adjusting the position or size of bar 46 or stop member 34 the fully extended position may be varied. In the example illustrated in Figure 1 the fully extended position corresponds to the perch pivoting through an angle α , in movement from the fully retracted to the fully open position, of approximately 90°. It has been found that in use providing a stop member 34 as part of port 12 avoids the perch abutting against the feeder body and thereby acting as a lever when a bird is supported on the perch; the leverage tending to dislodge the port from the bird feeder body.

In use birds will often rest upon the end rail 42 of the perch. In this position the bird may feed in a relaxed manner without having to bend its neck as required by most conventional perches where in contrast the bird is facing in a direction perpendicular to the feeding orifice 26. If the perch is designed for relatively large birds it may be preferable to position the bar 34 such that α is approximately 150°. This increases the separation of the end rail 30 from the port aperture 20.

The pivoting means shown in this embodiment comprises two U-shaped recesses 30 and two pivot rods 44. However, a single pivot rod may be formed to connect the "free" ends of the perch side rails 40.

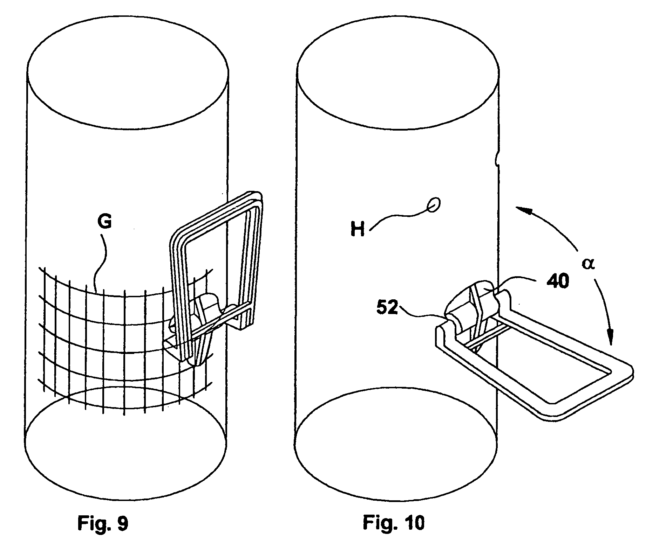

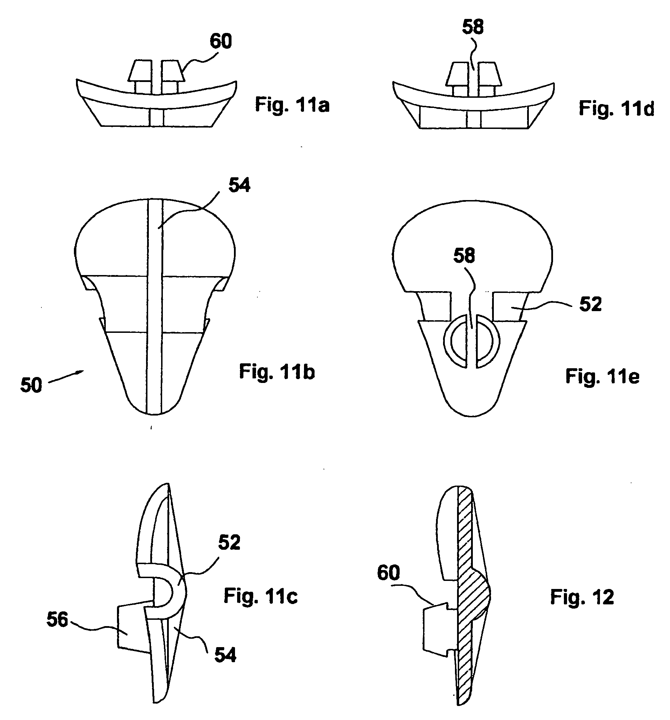

In another embodiment (see Figures 9 to 12) the first part 50 excludes the port flange and distributor shown in the embodiment of Figures 3 and 4. Hence, first part 50 is essentially a locating member comprising a pair of U-shaped recesses 52, separated by a forward facing stop member 54, and a rearward facing engaging lug 56. In use, lug 56 locates a hole in the outer wall (W) of a birdfeeder body. For example, engaging lug 56 may push fit into cage grid G (see Figure 9) or a small aperture (not shown) located in the body wall of a birdfeeder (see Figure 10) preferably located below a feeding hole H. Preferably, the lug 56 has resilience; this being provided by one or more slots 58 and/or by selection of a suitably resilient material for the lug. This resilience combined with a frustroconically tapered outer profile 60 assists location and engagement of lug 56 in use.

The perch of the invention advantageously provides a portion of the perch that, when fully retracted, is substantially parallel to the outer surface of a feeder to which it is attached. It is not essential that the perch be generally U-shaped to achieve this effect. For example, the perch may be generally ring-shaped, T-shaped or L-shaped. Further, the perch may have a single rail and a single pivot, rather than the two side rails and two pivots shown in Figure 1.

## Claims

1. A bird feeder perch assembly (10) comprising a locating member (1250), a perch (14) and pivoting means (30,44), **characterised in that** the pivoting means allows the perch to pivot relative to the locating member, such that in use the locating member may engage a bird feeder body and when so engaged the perch may pivot, from a retracted position in which the perch is substantially flush with the bird feeder body, to an extended position in which the perch projects outwardly from the bird feeder body such that a bird may rest upon the perch.

2. An assembly according to Claim 1 wherein the pivoting means comprises a pivot (44) that in use is held in place between a U-shaped recess 30 in the underside of locating member (12,50) and the outer wall of the birdfeeder body.

3. An assembly according to Claim 1 or 2 wherein the locating member is a bird feeding port.

4. An assembly according to any preceding claim wherein the perch (14) pivots about an axis that, in use, is either substantially parallel to or tangential to the outer surface of said bird feeder body.

5. An assembly according to any preceding claim wherein the pivoting means comprises a recess in (30) the locating member and an engaging shaft (44) attached to or integral with the perch.

6. An assembly according to Claim 5 wherein the recess (30) in the locating member (12) is U-shaped.

7. An assembly according to any preceding claim wherein in moving from retracted position to extended position the perch (14) pivots through angle (α) of at least 80°.

8. An assembly according to any preceding claim wherein the perch (14) comprises a restraining portion (46) that is displaced some distance outward from the axis about which the perch may pivot such that when the perch is in the fully extended position the restraining portion abuts against a stop member (34) that is integral with or attached to the locating member.

9. An assembly according to any preceding claim wherein the perch (14) comprises at least two elongate members (40, 42)that extend in mutually orthogonal directions.

10. An assembly according to any of Claims 1 to 6 wherein the perch (14) is ring-shaped and where the pivoting means comprises a pivot at the periphery of the ring.

11. An assembly according to any of Claims 1 to 8 wherein the perch (14) is U-shaped and the pivoting means comprises a pivot (44) at each free end of the perch.

12. An assembly according to any preceding claim wherein the pivoting means comprises a plurality of recesses (30) in the locating member (12).

13. An assembly according to Claim 3 wherein in use the pivoting means is located below the bird feeding port aperture.

## Patentansprüche

1. Eine Sitzstange für eine Vogelfütteranlage (10) mit einem ortsfesten Glied (12, 50), einer Sitzstange (14) und schwenkbaren Mitteln (30, 44), **dadurch gekennzeichnet, dass** die schwenkbaren Mittel es der Sitzstange ermöglichen, relativ zu dem ortsfesten Glied zu schwenken, so dass das ortsfeste Glied während der Benutzung mit einem Körper einer Vogelfütteranlage verbindbar ist und wenn er derart verbunden ist, die Sitzstange schwenkbar ist von einer eingefahrenen Position in eine Position, in der die Sitzstange im Wesentlichen bündig mit dem Körper der Vogelfütteranlage abschließt in eine ausgefahrene Position, in der die Sitzstange von dem Körper der Vogelfütteranlage auswärts ausragt, so dass es einem Vogel ermöglicht wird auf der Sitzstange zu ruhen.

2. Eine Anordnung nach Anspruch 1, **dadurch gekennzeichnet, dass** die schwenkbaren Mittel einen Drehzapfen (44) umfassen, der im Gebrauch festhaltbar zwischen einer U-förmigen Aussparung (30) ist, die auf der Unterseite des ortsfesten Gliedes (12, 50) und auf der Außenwandseite des Körpers der Vogelfütteranlage angeordnet ist.

3. Eine Anordnung nach den Ansprüchen 1 oder 2, **dadurch gekennzeichnet, dass** das ortsfeste Glied ein Vogelfutternapf ist.

4. Eine Anordnung nach einem der vorhergehenden Ansprüchen, **dadurch gekennzeichnet, dass** die Sitzstange (14) in Verwendung um eine Achse herum schwenkbar ist, die entweder im Wesentlichen parallel zu oder tangential zu der äußeren Oberfläche des vorgenannten Körpers der Vogelfütteranlage ist.

5. Eine Anordnung nach einem der vorangegangenen Ansprüchen, **dadurch gekennzeichnet, dass** die Schwenkmittel eine Ausnehmung (30) umfassen, die am kurzfesten Glied und am verbindenden Schaft (44) vorhanden ist und im Wesentlichen mit der Sitzstange verbunden ist.

6. Eine Anordnung nach dem Anspruch 5, **dadurch gekennzeichnet, dass** die Aussparung (30) in dem ortsfesten Glied (12) eine U-Form aufweist.

7. Eine Anordnung nach einem der vorangegangenen Ansprüchen, **dadurch gekennzeichnet, dass** in der Bewegung aus der eingefahrenen Position in die ausgefahrene Position die Sitzstange (14) schwenkbar mit dem Winkel (α) wenigsten 80° ist.

8. Eine Anordnung nach einem der vorangegangenen Ansprüchen, **dadurch gekennzeichnet, dass** die Sitzstange (14) einen Rückhalteteilbereich (46) umfasst, der mit einem Abstand entfernt von der Achse, mit der die Sitzstange schwenkbar ist, angeordnet ist, so dass die Sitzstange in ihrer vollkommenen ausgefahrenen Position der Rückhalteteilbereich gegen ein Stopperglied (34) anstößt, das eingebaut oder angeheftet an dem ortsfesten Glied ist.

9. Eine Anordnung nach einem der vorangegangenen Ansprüchen, **dadurch gekennzeichnet, dass** die Sitzstange (14) wenigstens zwei verlängerbare Glieder (40, 42) umfasst, die gemeinsam in orthogonalen Richtungen ausdehnbar sind.

10. Eine Anordnung nach einem der vorangegangenen Ansprüchen 1 bis 6, **dadurch gekennzeichnet, dass** die Sitzstange ringförmig ausgebildet ist und wobei die Schwenkmittel einen Drehzapfen an der Peripherie des Rings umfassen.

11. Eine Anordnung nach einem der Ansprüchen 1 bis 8, **dadurch gekennzeichnet, dass** die Sitzstange (14) U-förmig ausgebildet ist und die Schwenkmittel einen Drehzapfen (44) an jedem freien Ende der Sitzstange umfassen.

12. Eine Anordnung nach einem der vorangegangenen Ansprüchen, **dadurch gekennzeichnet, dass** die Schwenkmittel eine Vielzahl von Ausnehmungen in dem ortsfesten Glied (12) umfassen.

13. Eine Anordnung nach Anspruch 3, **dadurch gekennzeichnet, dass** das Schwenkmittel unterhalb der Öffnung des Vogelfutternapfes angeordnet ist.

## Revendications

1. Ensemble (10) à perchoir de mangeoire pour oiseaux, comprenant un organe de positionnement (12, 50), un perchoir (14) et un dispositif de pivotement (30, 44), **caractérisé en ce que** le dispositif de pivotement permet au perchoir de pivoter par rapport à l'organe de positionnement de manière que, pendant l'utilisation, l'organe de positionnement puisse coopérer avec un corps de mangeoire pour oiseaux et que, pour une telle coopération, le perchoir puisse pivoter d'une position reculée dans laquelle le perchoir est pratiquement au niveau du corps de mangeoire pour oiseaux et une position étendue dans laquelle le perchoir dépasse à l'extérieur du corps de mangeoire pour oiseaux si bien qu'un oiseau peut reposer sur le perchoir.

2. Ensemble selon la revendication 1, dans lequel le dispositif de pivotement comporte un pivot (44) qui, pendant l'utilisation, est maintenu en place entre une cavité en U (30) placée à la face inférieure de l'organe de positionnement (12, 50) et la paroi externe du corps de mangeoire pour oiseaux.

3. Ensemble selon la revendication 1 ou 2, dans lequel l'organe de positionnement est un orifice d'alimentation d'oiseau.

4. Ensemble selon l'une quelconque des revendications précédentes, dans laquelle le perchoir (14) pivote autour d'un axe qui, pendant l'utilisation, est soit pratiquement parallèle à la surface externe du corps de mangeoire pour oiseaux, soit est tangent à cette surface externe.

5. Ensemble selon l'une quelconque des revendications précédentes, dans lequel le dispositif de pivotement comprend une cavité dans l'organe de positionnement (30) et un arbre (44) de coopération fixé au perchoir ou solidaire de celui-ci.

6. Ensemble selon la revendication 5, dans lequel la cavité (30) de l'organe de positionnement (12) a une forme en U.

7. Ensemble selon l'une quelconque des revendications précédentes, dans lequel, lors du déplacement de la position reculée vers la position étendue, le perchoir (14) pivote d'un angle (α) d'au moins 80°.

8. Ensemble selon l'une quelconque des revendications précédentes, dans lequel le perchoir (14) comporte une partie de retenue (46) qui est décalée d'une certaine distance vers l'extérieur de l'axe autour duquel le perchoir peut pivoter si bien que, lorsque le perchoir est dans sa position totalement étendue, la partie de retenue est en butée contre un organe d'arrêt (34) qui est solidaire de l'organe de positionnement ou est fixé à celui-ci.

9. Ensemble selon l'une quelconque des revendications précédentes, dans lequel le perchoir (14) comporte au moins deux organes allongés (40, 42) qui s'étendent dans des directions mutuellement orthogonales.

10. Ensemble selon l'une quelconque des revendications 1 à 6, dans lequel le perchoir (14) a une forme d'anneau, et dans lequel le dispositif de pivotement comporte un pivot placé à la périphérie de l'anneau.

11. Ensemble selon l'une quelconque des revendications 1 à 8, dans lequel le perchoir (14) a une forme en U et le dispositif de pivotement comporte un pivot (44) à chaque extrémité libre du perchoir.

12. Ensemble selon l'une quelconque des revendications précédentes, dans lequel le dispositif de pivotement comprend plusieurs cavités (30) formées dans l'organe de positionnement (12).

13. Ensemble selon la revendication 3, dans lequel, pendant l'utilisation, le dispositif de pivotement est disposé au-dessous de l'ouverture de l'orifice d'alimentation pour oiseaux.
